# FASCICULE DE BREVET EUROPEEN

(11) **EP 3 524 472 B1**
(45) Date de publication et mention de la délivrance du brevet: **19.08.2020**
(21) Numéro de dépôt: 19152761.3
(22) Date de dépôt: 21.01.2019
(51) Int. Cl.: B60Q 1/26, B60Q 1/28, F21S 43/14, F21Y 115/10, F21Y 107/90

(54) **DISPOSITIF D'ÉCLAIRAGE À FACE DE CARTE À CIRCUITS IMPRIMÉS ASSOCIÉE À DEUX FONCTIONS PHOTOMÉTRIQUES VOISINES**
BELEUCHTUNGSEINRICHTUNG MIT EINER SEITE EINER LEITERPLATTE MIT ZWEI NACHBAREN PHOTOMETRISCHEN FUNKTIONEN
LIGHTING DEVICE WITH ONE SIDE OF A PRINTED CIRCUIT BOARD ASSOCIATED WITH TWO NEIGHBOURING PHOTOMETRIC FUNCTIONS

(30) Priorité: 09.02.2018 FR 1851083
(43) Date de publication de la demande: 14.08.2019
(73) Titulaire: PSA Automobiles SA, 78300 Poissy (FR)
(72) Inventeur: PERON, RODOLPHE, 95220 HERBLAY (FR)

(56) Documents cités:
- EP-A1- 1 916 472
- EP-A1- 2 261 555
- EP-A1- 3 098 499
- WO-A2-2011/026088
- DE-A1-102010 043 313
- DE-A1-102014 008 043
- FR-A1- 3 025 286
- US-A1- 2013 272 009

## Description

L'invention concerne les dispositifs d'éclairage, et plus précisément ceux qui assurent au moins deux fonctions photométriques.

Dans ce qui suit, on entend par « fonction photométrique » aussi bien une fonction photométrique d'éclairage, qu'une fonction photométrique de signalisation ou qu'une fonction photométrique d'effet lumineux, éventuellement décoratif.

Dans certains domaines, comme par exemple celui des véhicules, éventuellement de type automobile, on utilise des dispositifs d'éclairage pour assurer au moins deux fonctions photométriques. Dans le cas d'un véhicule, ces fonctions photométriques peuvent, par exemple, être choisies parmi une fonction de feu de stop, une fonction d'indicateur de changement de direction, une fonction de feu de position (ou veilleuse ou encore lanterne), ou une fonction de feu de jour (ou DRL (pour « Daytime running Light (or Lamp) » - signalisation lumineuse allumée automatiquement lorsque le véhicule est mis en fonctionnement pendant le jour)).

Comme cela est décrit dans le document brevet WO 201126088, certains de ces dispositifs d'éclairage comprennent une carte à circuits imprimés, par exemple de type PCB (« Printed Circuit Board »), et des première et seconde pièces moulées. La carte à circuits imprimés comporte des première et seconde faces opposées entre elles et sur lesquelles sont installées respectivement des premières et secondes sources générant respectivement des premiers et seconds photons. La première pièce moulée définit une première cavité délimitée dans une première partie arrière par un premier réflecteur orienté vers les premières sources et chargé de réfléchir les premiers photons vers une partie avant. La seconde pièce moulée définit une seconde cavité délimitée dans une seconde partie arrière par un second réflecteur orienté vers les secondes sources et chargé de réfléchir les seconds photons vers la partie avant.

Dans un tel dispositif d'éclairage la carte à circuits imprimés se retrouve intercalée entre les première et seconde pièces moulées qui définissent les premier et second réflecteurs, et doit comporter des sources de photons sur ses première et seconde faces. Les première et seconde pièces moulées sont solidarisées à la carte à circuits imprimés ce qui pose fréquemment des difficultés d'assemblage (et plus précisément en matière de chaîne de cote vis-à-vis des positions des sources de photons). En outre, en utilisant deux pièces moulées pour assurer deux fonctions photométriques on augmente la probabilité d'avoir des fuites de lumière pouvant perturber l'une au moins de ces deux fonctions photométriques. De plus, l'agencement actuel ne permet pas au dispositif d'éclairage d'assurer trois fonctions photométriques.

Il est également connu du document EP3098499A1 un dispositif d'éclairage conforme au préambule de la description.

Cependant, l'enseignement de ce document n'empêche pas que les deuxièmes photons se propagent vers une face arrière du premier réflecteur.

L'invention a donc notamment pour but d'améliorer la situation.

Elle propose notamment à cet effet un dispositif d'éclairage conforme à la partie caractérisante de la revendication 1.

Le dispositif d'éclairage selon l'invention peut comporter d'autres caractéristiques qui peuvent être prises séparément ou en combinaison, et notamment :
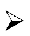 lorsque N deuxièmes sources sont installées sur la première face, avec N ≥ 2, la première pièce moulée peut comprendre N premières parois délimitant chacune un espace interne logeant l'une des N deuxièmes sources ;
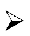 en variante, lorsque N deuxièmes sources sont installées sur la première face, avec N ≥ 2, la première pièce moulée peut comprendre une unique première paroi délimitant un espace interne logeant les N deuxièmes sources ;
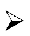 chaque première paroi peut contraindre les deuxièmes photons à se propager en direction du deuxième réflecteur ;
   - sa première pièce moulée peut comprendre une paroi de protection s'étendant dans la première partie arrière derrière une face arrière du premier réflecteur jusqu'avant une zone de passage des deuxièmes photons, pour empêcher la réflexion des deuxièmes photons vers cette face arrière ;
   - sa carte à circuits imprimés peut comporter une seconde face, opposée à la première face, et sur laquelle est installée au moins une troisième source générant des troisièmes photons. Dans ce cas, il peut comprendre une seconde pièce moulée définissant une troisième cavité délimitée dans une troisième partie arrière par un troisième réflecteur orienté vers chaque troisième source et réfléchissant les troisièmes photons vers la partie avant ;
   - chaque réflecteur peut participer à une fonction photométrique qui est choisie parmi une fonction d'indicateur de changement de direction, une fonction de feu de stop, une fonction de feu de jour, et une fonction de feu de position.

L'invention propose également un bloc optique de véhicule, éventuellement de type automobile, et comprenant au moins un dispositif d'éclairage du type de celui présenté ci-avant.

L'invention propose également un véhicule, éventuellement de type automobile, et comprenant au moins un dispositif d'éclairage du type de celui présenté ci-avant et/ou au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et certains niveaux de gris), sur lesquels :
- la figure 1 illustre schématiquement, dans une vue en perspective et en coupe, un exemple de bloc optique comprenant un exemple de réalisation d'un dispositif d'éclairage selon l'invention,
- la figure 2 illustre schématiquement, dans une vue en coupe dans un plan XZ, le bloc optique de la figure 1,
- la figure 3 illustre schématiquement, dans une première vue en perspective du côté avant, la première pièce moulée du dispositif d'éclairage des figures 1 et 2, et
- la figure 4 illustre schématiquement, dans une seconde vue en perspective du côté arrière, la première pièce moulée du dispositif d'éclairage des figures 1 et 2.

L'invention a notamment pour but de proposer un dispositif d'éclairage DE comprenant une carte à circuits imprimés CC et au moins une pièce moulée PM1 propres à assurer au moins deux fonctions photométriques.

On considère dans ce qui suit, à titre d'exemple non limitatif, que le dispositif d'éclairage DE est destiné à équiper un bloc optique BO d'un véhicule de type automobile, comme par exemple une voiture. Mais l'invention n'est pas limitée à cette application. En effet, un dispositif d'éclairage DE peut être un équipement en soi (comportant éventuellement son propre boîtier et sa propre glace de protection), ou bien peut faire partie d'un autre équipement qu'un bloc optique de véhicule. Ainsi, un dispositif d'éclairage DE peut faire partie de n'importe quel véhicule (terrestre, maritime (ou fluvial), ou aérien), de n'importe quelle installation, y compris de type industriel, de n'importe quel appareil (ou système), et de n'importe quel bâtiment.

Par ailleurs, on considère dans ce qui suit, à titre d'exemple non limitatif, que le bloc optique BO (comprenant au moins un dispositif d'éclairage DE) est un feu arrière assurant au moins deux fonctions photométriques de signalisation. Mais l'invention n'est pas limitée à cette application. En effet, le dispositif d'éclairage DE, selon l'invention, est un dispositif lumineux pouvant assurer au moins deux fonctions photométriques d'éclairage ou de signalisation ou d'effet lumineux, éventuellement décoratif. Ainsi, il peut assurer au moins deux fonctions photométriques de signalisation choisies chacune parmi une fonction d'indicateur de changement de direction, une fonction de feu de stop, une fonction de feu de jour (ou DRL), et une fonction de feu de position (ou veilleuse ou encore lanterne).

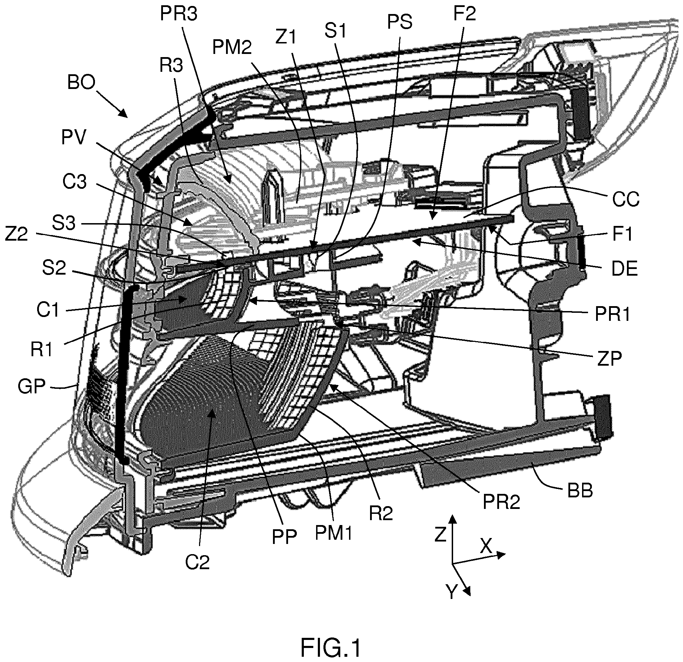

Sur les figures 1 à 4, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur la figure 1, une partie d'un bloc optique BO de véhicule (ici un feu arrière) comprenant, notamment, un boîtier BB, délimitant une partie d'une cavité logeant un dispositif d'éclairage DE selon l'invention, et une glace de protection GP, en verre ou en matière plastique.

Le boîtier BB est destiné, ici, à être solidarisé à une partie de la carrosserie d'un véhicule (ici dans une partie arrière). Il est réalisé dans un matériau rigide, comme par exemple une matière plastique ou synthétique. Dans ce cas, il peut être réalisé par moulage.

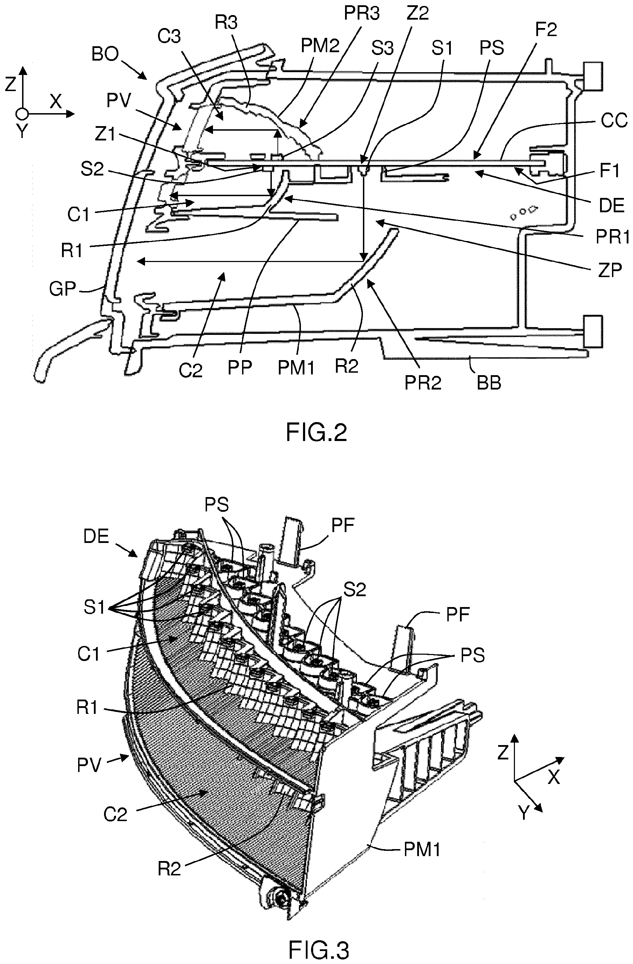

Comme illustré sur les figures 1 et 2, un dispositif d'éclairage DE, selon l'invention, comprend une carte à circuits imprimés CC et au moins une première pièce moulée PM1.

La carte à circuits imprimés CC comprend des première F1 et seconde F2 faces opposées l'une à l'autre. Elle peut, par exemple, être de type PCB (« Printed Circuit Board »), et est de préférence rigide.

La première face F1 comprend une première zone Z1 sur laquelle est installée au moins une première source S1 agencée de manière à générer des premiers photons, et une seconde zone Z2 située derrière la première zone Z1 et sur laquelle est installée au moins une deuxième source S2 générant des deuxièmes photons.

On notera que dans l'exemple illustré non limitativement sur les figures 1 à 4, les première F1 et seconde F2 faces sont installées sensiblement horizontalement (c'est-à-dire dans le plan XY). Par conséquent, les première F1 et seconde F2 faces sont respectivement des faces inférieure et supérieure, et la seconde zone Z2 est décalée suivant la direction longitudinale X par rapport à la première zone Z1. Mais cela n'est pas obligatoire. En effet, les première F1 et seconde F2 faces pourraient être installées sensiblement verticalement (c'est-à-dire dans le plan XZ), ou bien en biais.

Chacune des première(s) S1 et deuxième(s) S2 sources de photons peut, par exemple, comprendre au moins une diode électroluminescente, de type classique (ou LED (« Light-Emitting Diode »)) ou de type organique (ou OLED (« Organic Light-Emitting Diode »)), ou bien une diode laser. Dans l'exemple illustré non limitativement, chacune des première(s) S1 et deuxième(s) S2 sources de photons comprend une unique diode électroluminescente. Par ailleurs, dans l'exemple illustré non limitativement, la première zone Z1 comprend plusieurs (M) premières sources S1, avec M ≥ 2 (et par exemple égal à douze), et la seconde zone Z2 comprend plusieurs (N) deuxièmes sources S2, avec N ≥ 2 (et par exemple égal à douze). Mais le nombre de premières sources S1 de la première zone Z1 peut prendre n'importe quelle valeur supérieure ou égale à un (1), et le nombre de deuxièmes sources S2 de la seconde zone Z2 peut prendre n'importe quelle valeur supérieure ou égale à un (1).

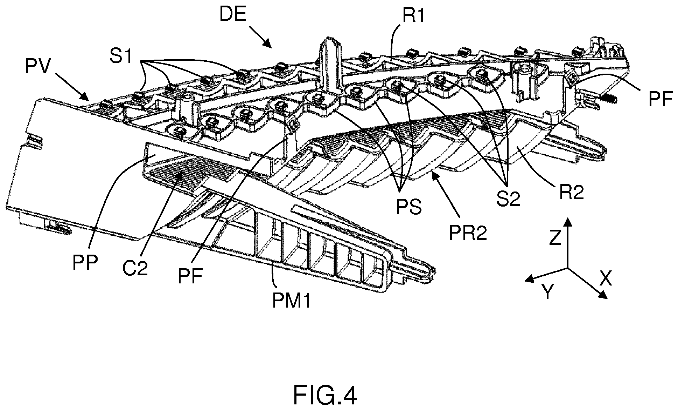

La première pièce moulée PM1 définit des première C1 et seconde C2 cavités voisines. Elle est réalisée par moulage dans une matière plastique telle que, par exemple, du polycarbonate (ou PC), éventuellement haute température (PC HT). Par ailleurs, cette première pièce moulée PM1 peut, par exemple et comme illustré non limitativement sur les figures 3 et 4, comprendre des pattes de fixation PF permettant de la solidariser à la carte à circuits imprimés CC. Cette solidarisation peut, par exemple, se faire par clippage ou vissage ou encore boutrolage.

La première cavité C1 est délimitée dans une première partie arrière PR1 par un premier réflecteur R1 qui est orienté vers chaque première source S1 (ici en étant placé sous ces dernières (S1)) et agencé de manière à réfléchir les premiers photons vers une partie avant PV (comme illustré sur la figure 2).

On entend ici par « partie avant » la partie du dispositif d'éclairage DE (et donc aussi, ici, du bloc optique BO) par laquelle les photons sortent à l'extérieur.

La deuxième cavité C2 est délimitée dans une deuxième partie arrière PR2 par un deuxième réflecteur R2 qui est décalé au moins partiellement derrière le premier réflecteur R1 (ici suivant la direction longitudinale X) en s'étendant après ce dernier (R1) (ici sous le premier réflecteur R1 en étant décalé par rapport à lui suivant la direction verticale Z), et orienté vers chaque deuxième source S2 (ici en étant placé sous ces dernières (S2)). Ce deuxième réflecteur R2 est agencé de manière à réfléchir vers la partie avant PV les deuxièmes photons qui passent derrière le premier réflecteur R1 (comme illustré sur la figure 2).

Ainsi, grâce à cette première pièce moulée PM1 dans laquelle le deuxième réflecteur R2 est décalé par rapport au premier réflecteur R1 suivant deux directions (ici X et Z), on peut installer toutes les première(s) S1 et deuxième(s) S2 sources de photons sur la première face F1 et ainsi assurer deux fonctions photométriques du côté de cette dernière (F1). Cela permet de réduire le nombre de pièces à associer à la carte à circuits imprimés CC, et donc de réduire les difficultés d'assemblage (et plus précisément en matière de chaîne de cote vis-à-vis des positions des première(s) S1 et deuxième(s) S2 sources de photons). En outre, cela permet de réduire la probabilité d'avoir des fuites de lumière pouvant perturber l'une au moins de ces deux fonctions photométriques. De plus, et comme on le verra plus loin, cela peut permettre d'assurer une troisième fonction photométrique du côté de la seconde face F2.

A titre d'exemple non limitatif, le premier réflecteur R1 peut participer à une première fonction photométrique de type fonction d'indicateur de changement de direction. Mais cela n'est pas obligatoire. Ainsi, le premier réflecteur R1 pourrait participer à une première fonction photométrique de type fonction de feu de stop ou fonction de feu de jour ou encore fonction de feu de position, par exemple.

Egalement à titre d'exemple non limitatif, le deuxième réflecteur R2 peut participer à une deuxième fonction photométrique de type fonction de feu de stop. Mais cela n'est pas obligatoire. Ainsi, le deuxième réflecteur R2 pourrait participer à une deuxième fonction photométrique de type fonction d'indicateur de changement de direction ou fonction de feu de jour ou encore fonction de feu de position, par exemple.

On notera, comme illustré non limitativement sur les figures 1 à 4, que la première pièce moulée PM1 peut, par exemple, comprendre, derrière le premier réflecteur R1 et en regard de la seconde zone Z2 de la première face F1, au moins une première paroi PS qui se referme sur elle-même en délimitant un espace interne logeant au moins une deuxième source S2 et empêchant les deuxièmes photons de se propager vers la face arrière du premier réflecteur R1 (opposée à la partie avant PV).

Dans l'exemple illustré non limitativement sur les figures 1 à 4, et dans lequel N deuxièmes sources S2 sont installées sur la première face F1, avec N ≥ 2, la première pièce moulée PM1 comprend N premières parois PS qui délimitent chacune un espace interne logeant l'une des N deuxièmes sources S2.

Mais dans une variante dans laquelle N deuxièmes sources S2 sont installées sur la première face F1, avec N ≥ 2, la première pièce moulée PM1 peut comprendre une unique première paroi PS qui délimite un espace interne logeant les N deuxièmes sources S2.

On notera que chaque première paroi PS peut être éventuellement agencée de manière à contraindre les deuxièmes photons (générés par chaque deuxième source S2 qu'elle entoure) à se propager en direction du deuxième réflecteur R2 (ici vers le bas). A cet effet, chaque première paroi PS peut, par exemple, présenter une forme cylindrique, pas nécessairement circulaire, mais suffisamment large pour accueillir chaque deuxième source S2 associée compte tenu des tolérances dimensionnelles de fabrication et d'assemblage sur la première face F1.

On notera également que la première pièce moulée PM1 peut aussi, éventuellement, comprendre une paroi de protection PP qui s'étend dans la première partie arrière PR1 derrière la face arrière du premier réflecteur R1 jusqu'avant une zone de passage ZP des deuxièmes photons. Cette paroi de protection PP, ici définie sensiblement dans le plan XY, est destinée à empêcher la réflexion des deuxièmes photons (par le deuxième réflecteur R2) vers la face arrière du premier réflecteur R1. On comprendra que la zone de passage ZP est définie entre l'extrémité libre (ici arrière) de la paroi de protection PP et l'extrémité libre (ici supérieure) du deuxième réflecteur R2.

On notera également, comme évoqué précédemment et comme illustré non limitativement sur les figures 1 et 2, que la seconde face F2 de la carte à circuits imprimés CC peut comporter au moins une troisième source S3 chargé de générer des troisièmes photons. Dans ce cas, le dispositif d'éclairage DE comprend une seconde pièce moulée PM2 qui définit une troisième cavité C3 délimitée dans une troisième partie arrière PR3 par un troisième réflecteur R3 orienté vers chaque troisième source S3 (ici en étant placé au-dessus de ces dernières (S3)) et agencé de manière à réfléchir les troisièmes photons vers la partie avant PV (comme illustré sur la figure 2).

Chaque troisième source de photons S3 peut, par exemple, comprendre au moins une diode électroluminescente, de type classique (ou LED) ou de type organique (ou OLED), ou bien une diode laser. Dans l'exemple illustré non limitativement, chaque troisième source de photons S3 comprend une unique diode électroluminescente. Par ailleurs, dans l'exemple illustré non limitativement, la seconde face F2 comprend plusieurs (P) troisièmes sources S3, avec P ≥ 2 (et par exemple égal à douze). Mais le nombre de troisièmes sources S3 peut prendre n'importe quelle valeur supérieure ou égale à un (1).

Grâce à cette seconde pièce moulée PM2 additionnelle, le dispositif d'éclairage DE peut avantageusement assurer trois fonctions photométriques.

A titre d'exemple non limitatif, le troisième réflecteur R3 peut participer à une troisième fonction photométrique de type fonction de feu de position. Mais cela n'est pas obligatoire. Ainsi, le troisième réflecteur R3 pourrait participer à une troisième fonction photométrique de type fonction d'indicateur de changement de direction ou fonction de feu de jour ou encore fonction de feu de stop.

La seconde pièce moulée PM2 est réalisée par moulage dans une matière plastique telle que, par exemple, du polycarbonate (ou PC), éventuellement haute température (PC HT). Par ailleurs, cette seconde pièce moulée PM2 peut, par exemple, comprendre des pattes de fixation permettant de la solidariser à la carte à circuits imprimés CC. Cette solidarisation peut, par exemple, se faire par clippage ou vissage ou encore boutrolage.

## Revendications

1. Dispositif d'éclairage (DE) comprenant i) une carte à circuits imprimés (CC) comportant une première face (F1) ayant une première zone (Z1) sur laquelle est installée au moins une première source (S1) générant des premiers photons, et ii) une première pièce moulée (PM1) définissant une première cavité (C1) délimitée dans une première partie arrière (PR1) par un premier réflecteur (R1) orienté vers chaque première source (S1) et réfléchissant lesdits premiers photons vers une partie avant (PV), dans lequel ladite première face (F1) a une seconde zone (Z2) située derrière ladite première zone (Z1) et sur laquelle est installée au moins une deuxième source (S2) générant des deuxièmes photons, et dans lequel ladite première pièce moulée (PM1) définit une deuxième cavité (C2) délimitée dans une deuxième partie arrière (PR2) par un deuxième réflecteur (R2), décalé au moins partiellement derrière ledit premier réflecteur (R1) en s'étendant après ce dernier (R1), orienté vers chaque deuxième source (S2) et réfléchissant vers ladite partie avant (PV) lesdits deuxièmes photons passant derrière ledit premier réflecteur (R1), **caractérisé en ce que** ladite première pièce moulée (PM1) comprend derrière ledit premier réflecteur (R1) et en regard de ladite seconde zone (Z2) au moins une première paroi (PS) se refermant sur elle-même en délimitant un espace interne logeant au moins une deuxième source (S2) et empêchant lesdits deuxièmes photons de se propager vers une face arrière dudit premier réflecteur (R1).

2. Dispositif selon la revendication 1, **caractérisé en ce que** lorsque N deuxièmes sources (S2) sont installées sur ladite première face (F1), avec N ≥ 2, ladite première pièce moulée (PM1) comprend N premières parois (PS) délimitant chacune un espace interne logeant l'une desdites N deuxièmes sources (S2).

3. Dispositif selon la revendication 1, **caractérisé en ce que** lorsque N deuxièmes sources (S2) sont installées sur ladite première face (F1), avec N ≥ 2, ladite première pièce moulée (PM1) comprend une unique première paroi (PS) délimitant un espace interne logeant lesdites N deuxièmes sources (S2).

4. Dispositif selon l'une des revendications 1 à 3, **caractérisé en ce que** chaque première paroi (PS) contraint lesdits deuxièmes photons à se propager en direction dudit deuxième réflecteur (R2).

5. Dispositif selon l'une des revendications 1 à 4, **caractérisé en ce que** ladite première pièce moulée (PM1) comprend une paroi de protection (PP) s'étendant dans ladite première partie arrière (PR1) derrière une face arrière dudit premier réflecteur (R1) jusqu'avant une zone de passage (ZP) desdits deuxièmes photons, pour empêcher la réflexion desdits deuxièmes photons vers cette face arrière.

6. Dispositif selon l'une des revendications 1 à 5, **caractérisé en ce que** ladite carte à circuits imprimés (CC) comporte une seconde face (F2), opposée à ladite première face (F1), et sur laquelle est installée au moins une troisième source (S3) générant des troisièmes photons, et **en ce qu'**il comprend une seconde pièce moulée (PM2) définissant une troisième cavité (C3) délimitée dans une troisième partie arrière (PR3) par un troisième réflecteur (R3) orienté vers chaque troisième source (S3) et réfléchissant lesdits troisièmes photons vers ladite partie avant (PV).

7. Dispositif selon l'une des revendications 1 à 6, **caractérisé en ce que** chaque réflecteur (R1, R2, R3) participe à une fonction photométrique choisie parmi une fonction d'indicateur de changement de direction, une fonction de feu de stop, une fonction de feu de jour, et une fonction de feu de position.

8. Bloc optique (BO) de véhicule, **caractérisé en ce qu'**il comprend au moins un dispositif d'éclairage (DE) selon l'une des revendications précédentes.

9. Véhicule, **caractérisé en ce qu'**il comprend au moins un bloc optique (BO) selon la revendication 8 et/ou au moins un dispositif d'éclairage (DE) selon l'une des revendications 1 à 7.

## Patentansprüche

1. Beleuchtungsvorrichtung (DE) mit i) einer gedruckten Leiterplatte (CC), die eine erste Fläche (F1) mit einem ersten Zone (Z1) aufweist, auf dem mindestens eine erste Quelle (S1) installiert ist, die erste Photonen erzeugt, und ii) ein erstes Formteil (PM1), das einen ersten Hohlraum (C1) definiert, der in einem ersten hinteren Teil (PR1) durch einen ersten Reflektor (R1) begrenzt ist, der zu jeder ersten Quelle (S1) hin ausgerichtet ist und die ersten Photonen zu einem vorderen Teil (PV) reflektiert, wobei die erste Fläche (F1) eine zweite Zone (Z2) aufweist, die sich hinter der ersten Zone (Z1) befindet und auf der mindestens eine zweite Quelle (S2) installiert ist, die zweite Photonen erzeugt, und bei dem das erste Formteil (PM1) einen zweiten Hohlraum (C2) definiert, der in einem zweiten hinteren Abschnitt (PR2) durch einen zweiten Reflektor (R2) begrenzt ist, der zumindest teilweise hinter dem ersten Reflektor (R1) versetzt ist und sich nach diesem (R1) erstreckt, auf jede zweite Quelle (S2) ausgerichtet ist und auf den vorderen Teil (PV) reflektiert, wobei die zweiten Photonen hinter dem ersten Reflektor (R1) hindurchgehen, **dadurch gekennzeichnet, dass** das erste Formteil (PM1) hinter dem ersten Reflektor (R1) und gegenüber der zweiten Zone (Z2) mindestens eine erste Wand (PS) aufweist, die sich in sich selbst schließt, indem sie einen Innenraum begrenzt, der mindestens eine zweite Quelle (S2) aufnimmt und verhindert, dass sich die zweiten Photonen zu einer Rückseite des ersten Reflektors (R1) ausbreiten.

2. Vorrichtung nach Anspruch 1, **dadurch gekennzeichnet, dass**, wenn N zweite Quellen (S2) auf der ersten Fläche (F1) mit N ≥ 2 installiert sind, das erste Formteil (PM1) N erste Wände (PS) aufweist, die jeweils einen Innenraum begrenzen, der eine der N zweiten Quellen (S2) aufnimmt.

3. Vorrichtung nach Anspruch 1, **dadurch gekennzeichnet, dass**, wenn N zweite Quellen (S2) auf der ersten Fläche (F1) mit N ≥ 2 installiert sind, das erste Formteil (PM1) eine einzige erste Wand (PS) aufweist, die einen Innenraum begrenzt, der die N zweiten Quellen (S2) aufnimmt.

4. Vorrichtung nach einem der Ansprüche 1 bis 3, **dadurch gekennzeichnet, dass** jede erste Wand (PS) die zweiten Photonen zwingt, sich in Richtung des zweiten Reflektors (R2) auszubreiten.

5. Vorrichtung nach einem der Ansprüche 1 bis 4, **dadurch gekennzeichnet, dass** das erste Formteil (PM1) eine Schutzwand (PP) aufweist, die sich in dem ersten hinteren Teil (PR1) hinter einer Rückseite des ersten Reflektors (R1) bis vor eine Durchgangszone (ZP) für die zweiten Photonen erstreckt, um die Reflexion der zweiten Photonen zu dieser Rückseite zu verhindern.

6. Vorrichtung nach einem der Ansprüche 1 bis 5, **dadurch gekennzeichnet, dass** die Leiterplatte (CC) eine zweite Fläche (F2) aufweist, die der ersten Fläche (F1) gegenüberliegt und auf der mindestens eine dritte Quelle (S3) installiert ist, die dritte Photonen erzeugt, und dass sie einen zweiten geformten Teil (PM2) umfasst, der einen dritten Hohlraum (C3) definiert, der in einem dritten hinteren Teil (PR3) durch einen dritten Reflektor (R3) begrenzt ist, der auf jede dritte Quelle (S3) ausgerichtet ist und die dritten Photonen in Richtung des vorderen Teils (PV) reflektiert.

7. Vorrichtung nach einem der Ansprüche 1 bis 6, **dadurch gekennzeichnet, dass** jeder Reflektor (R1, R2, R3) an einer photometrischen Funktion teilnimmt, die aus einer Fahrtrichtungsanzeigerfunktion, einer Bremslichtfunktion, einer Tagfahrlichtfunktion und einer Positionslichtfunktion ausgewählt ist.

8. Optische Einheit für Fahrzeuge (BO), **dadurch gekennzeichnet, dass** sie mindestens eine Beleuchtungsvorrichtung (DE) nach einem der vorstehenden Ansprüche umfasst.

9. Fahrzeug, **dadurch gekennzeichnet, dass** es mindestens einen optischen Block (BO) nach Anspruch 8 und/oder mindestens eine Beleuchtungseinrichtung (DE) nach einem der Ansprüche 1 bis 7 umfasst.

## Claims

1. Lighting device (DE) comprising i) a printed circuit board (CC) having a first face (F1) with a first zone (Z1) on which at least one first source (S1) generating first photons is installed, and ii) a first molded part (PM1) defining a first cavity (C1) delimited in a first rear part (PR1) by a first reflector (R1) oriented towards each first source (S1) and reflecting said first photons towards a front part (PV), wherein said first face (F1) has a second zone (Z2) located behind said first zone (Z1) and on which is installed at least one second source (S2) generating second photons, and wherein said first molded part (PM1) defines a second cavity (C2) delimited in a second rear portion (PR2) by a second reflector (R2), offset at least partially behind said first reflector (R1) and extending after the latter (R1), oriented towards each second source (S2) and reflecting towards said front part (PV) said second photons passing behind said first reflector (R1), **characterised in that** said first molded part (PM1) comprises behind said first reflector (R1) and facing said second zone (Z2) at least one first wall (PS) closing on itself by delimiting an internal space housing at least one second source (S2) and preventing said second photons from propagating towards a rear face of said first reflector (R1).

2. Device according to claim 1, **characterized in that** when N second sources (S2) are installed on said first face (F1), with N ≥ 2, said first molded part (PM1) comprises N first walls (PS) each delimiting an internal space housing one of said N second sources (S2).

3. Device according to claim 1, **characterized in that** when N second sources (S2) are installed on said first face (F1), with N ≥ 2, said first molded part (PM1) comprises a single first wall (PS) delimiting an internal space housing said N second sources (S2).

4. Device according to one of claims 1 to 3, **characterized in that** each first wall (PS) constrains said second photons to propagate in the direction of said second reflector (R2).

5. Device according to one of claims 1 to 4, **characterized in that** said first molded part (PM1) comprises a protective wall (PP) extending in said first rear part (PR1) behind a rear face of said first reflector (R1) as far as in front of a passage zone (ZP) for said second photons, in order to prevent the reflection of said second photons towards this rear face.

6. Device according to one of claims 1 to 5, **characterized in that** said printed circuit board (CC) has a second face (F2), opposite said first face (F1), and on which is installed at least one third source (S3) generating third photons, and **in that** it comprises a second moulded part (PM2) defining a third cavity (C3) delimited in a third rear part (PR3) by a third reflector (R3) oriented towards each third source (S3) and reflecting said third photons towards said front part (PV).

7. Device according to one of claims 1 to 6, **characterized in that** each reflector (R1, R2, R3) participates in a photometric function chosen from a direction indicator function, a stop light function, a daytime running light function and a position light function.

8. A vehicle optical unit (BO), **characterised in that** it comprises at least one lighting device (DE) according to one of the preceding claims.

9. Vehicle, **characterized in that** it comprises at least one optical block (BO) according to claim 8 and/or at least one lighting device (DE) according to one of the claims 1 to 7.
